# EUROPÄISCHE PATENTSCHRIFT

(11) **EP 3 038 325 B1**
(45) Veröffentlichungstag und Bekanntmachung des Hinweises auf die Patenterteilung: **11.12.2019**
(21) Anmeldenummer: 14199774.2
(22) Anmeldetag: 22.12.2014
(51) Int. Cl.: H04L 29/08

(54) **VERFAHREN ZUR DATENÜBERMITTLUNG IN EINEM KOMMUNIKATIONSNETZ EINES INDUSTRIELLEN AUTOMATISIERUNGSSYSTEMS UND KOPPEL-KOMMUNIKATIONSGERÄT**
Method for transmitting data in a communications network of an industrial automation system and coupling communication device
Procédé destiné à la transmission de données dans un réseau de communication d'un système d'automatisation industriel et appareil de communication à couplage

(43) Veröffentlichungstag der Anmeldung: 29.06.2016
(73) Patentinhaber: Siemens Aktiengesellschaft, 80333 München (DE)
(72) Erfinder: Kießling, Marcel, 90419 Nürnberg (DE)

(56) Entgegenhaltungen:
- FELD J: "PROFINET - scalable factory communication for all applications", FACTORY COMMUNICATION SYSTEMS, 2004. PROCEEDINGS. 2004 IEEE INTERNATIO NAL WORKSHOP ON VIENNA, AUSTRIA SEPT. 22-24, 2004, PISCATAWAY, NJ, USA,IEEE, 22. September 2004 (2004-09-22), Seiten 33-38, XP010756130, DOI: 10.1109/WFCS.2004.1377673 ISBN: 978-0-7803-8734-8
- VITULLO F ET AL: "Low-Complexity Link Microarchitecture for Mesochronous Communication in Networks-on-Chip", IEEE TRANSACTIONS ON COMPUTERS, IEEE SERVICE CENTER, LOS ALAMITOS, CA, US, Bd. 57, Nr. 9, 1. September 2008 (2008-09-01), Seiten 1196-1201, XP011227330, ISSN: 0018-9340, DOI: 10.1109/TC.2008.48
- KARUNAGARAN SRIRAM ET AL: "MAESTRO: A time-driven embedded testbed Architecture with Event-driven Synchronization", REAL TIME AND EMBEDDED TECHNOLOGY AND APPLICATIONS SYMPOSIUM, 2005. RTAS 2005. 11TH IEEE IEEE COMPUT. SOC.PROCEEDINGS. RTAS 2005. 11TH IEEE REAL TIME AND EMBEDDED TECHNOLOGY AND APPLICATIONS SYMPOSIUM,PISCATAWAY, NJ, USA, IEEE, SAN FRANCISCO, CA, USA, 15. April 2014 (2014-04-15), Seiten 237-248, XP032722396, ISSN: 1080-1812, DOI: 10.1109/RTAS.2014.6926006 ISBN: 0-7695-2302-1 [gefunden am 2014-10-15]
- SCHMIDT E G ET AL: "Message Scheduling for the FlexRay Protocol: The Dynamic Segment", IEEE TRANSACTIONS ON VEHICULAR TECHNOLOGY, IEEE SERVICE CENTER, PISCATAWAY, NJ, US, Bd. 58, Nr. 5, 1. Juni 2009 (2009-06-01), Seiten 2160-2169, XP011248759, ISSN: 0018-9545
- "DETERMINISTIC ETHERNET ; 8021-tutorial-final-v4", IEEE DRAFT; 8021-TUTORIAL-FINAL-V4, IEEE-SA, PISCATAWAY, NJ USA, Bd. 802, Nr. v4, 11. November 2012 (2012-11-11), Seiten 1-72, XP017755049, [gefunden am 2012-11-13]
- TILL STEINBACH ET AL: "Comparing time-triggered Ethernet with FlexRay: An evaluation of competing approaches to real-time for in-vehicle networks", FACTORY COMMUNICATION SYSTEMS (WFCS), 2010 8TH IEEE INTERNATIONAL WORKSHOP ON, IEEE, PISCATAWAY, NJ, USA, 18. Mai 2010 (2010-05-18), Seiten 199-202, XP031732723, ISBN: 978-1-4244-5460-0

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/Video Bridging) über Kommunikationsnetze ist entsprechend Standard IEEE 802.1Qav eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qbv sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch. Steuerungsdaten müssen nämlich üblicherweise innerhalb eines Bearbeitungszyklus übertragen und verarbeitet werden. Beispielsweise werden zu Beginn eines Bearbeitungszyklus von sämtlichen Sensoren Steuerungsdaten an eine zugeordnete speicherprogrammierbare Steuerung gesendet. Nach einer anschließenden Berechnung auf Basis von den Sensoren empfangener Steuerungsdaten sendet die speicherprogrammierbare Steuerung Steuerungsdaten an Aktoren des industriellen Automatisierungssystems. Danach erfolgt innerhalb eines nächsten Bearbeitungszyklus eine erneute Sensordatenabfrage. Damit ausreichend Zeit für eine Verarbeitung von Steuerungsdaten innerhalb eines Bearbeitungszyklus verbleibt, sollten Datenrahmen mit Steuerungsdaten möglichst zu Beginn eines Bearbeitungszyklus übertragen werden, insbesondere bei Verwendung dezentraler Peripheriegeräte oder dezentraler Ein- und Ausgabeeinheiten.

Aus WO 2014/072374 A1 ist ein Verfahren zur Übermittlung von Multicast-Datenströmen in einem industriellen Automatisierungssystem mittels Link-State-Routing-Protokollen bekannt, bei dem nicht für alle möglichen Knoten-Knoten-Verbindungen Routing-Tabellen berechnet werden, sondern nur für ausgewählte zeitkritische Pfade, insbesondere zwischen "Talkers" als Datenquellen und "Listeners" als Abonnenten von Datenquellen in industriellen Automatisierungssystemen. Für eine Berechnung von Routing-Pfaden in derartigen Kommunikationsnetzen werden Kommunikationsbeziehungen beschreibende Informationen mittels eines Link-State-Routing-Protokolls innerhalb des Kommunikationsnetzes verteilt. Die Informationen über Kommunikationsbeziehungen umfassen beispielsweise Angaben über eine Zusammenfassung von Kommunikationsteilnehmern innerhalb eines Multicast-Pfades bzw. über "Talkers" und zugeordnete "Listeners".

In der älteren europäischen Patentanmeldung mit dem Anmeldeaktenzeichen 13176454.0 ist ein Verfahren zur Übermittlung von Datenrahmen mittels eines Kommunikationsgeräts eines industriellen Automatisierungssystems beschrieben, bei dem mittels des Kommunikationsgeräts zu übermittelnden Datenrahmen jeweils eine Übermittlungspriorität zugeordnet ist. Für über zumindest einen ausgewählten Anschluss des Kommunikationsgeräts übermittelte Datenrahmen, die eine über einem vorgebbaren Prioritätsschwellwert liegende Übermittlungspriorität aufweisen, wird eine übermittelte Datenmenge erfasst. Die übermittelte Datenmenge wird periodisch innerhalb zumindest eines Überwachungszyklus erfasst. Die für jeden Überwachungszyklusdurchlauf erfasste Datenmenge wird auf eine Überschreitung eines vorgebbaren Mengenschwellwerts überwacht. Der ausgewählte Anschluss wird bei einer Überschreitung des Mengenschwellwerts für einen Überwachungszyklusdurchlauf während einer Sperrzeit bis zu einem Ende des jeweiligen Überwachungszyklusdurchlaufs gegen eine Übermittlung von Datenrahmen mit einer über dem Prioritätsschwellwert liegenden Übermittlungspriorität gesperrt.

Der Artikel "PROFINET - Scalable Factory Communication for all Applications" von Joachim Feld, IEEE, 2004, beschreibt Echtzeit-Datenübertragungsverfahren für den Einsatz in industriellen Automatisierungssystemen.

Der vorliegenden Erfindung liegt die Aufgabe zugrunde, ein Verfahren zur Datenübermittlung in einem Kommunikationsnetz eines industriellen Automatisierungssystems anzugeben, das eine Reduktion von Laufzeiten und Laufzeitschwankungen (Jitter) bei einer Übermittlung von Steuerungsdaten ermöglicht, sowie ein zur Durchführung des Verfahrens geeignetes Koppel-Kommunikationsgerät anzugeben.

Diese Aufgabe wird erfindungsgemäß durch ein Verfahren mit den in Anspruch 1 angegebenen Merkmalen und durch ein Koppel-Kommunikationsgerät mit den in Anspruch 17 angegebenen Merkmalen gelöst. Vorteilhafte Weiterbildungen des erfindungsgemäßen Verfahrens sind in den abhängigen Ansprüchen angegeben. Entsprechend dem erfindungsgemäßen Verfahren zur Datenübermittlung in einem Kommunikationsnetz eines industriellen Automatisierungssystems werden erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Die Koppel-Kommunikationsgeräte können beispielsweise Switches oder Bridges sein, die vorzugsweise untereinander zeitsynchronisiert sind. Die ersten Zeitintervalle sind jeweils zumindest in ein erstes und zweites Teilintervall unterteilt. Vorzugsweise sind die ersten und zweiten Zeitintervalle komplementär zueinander. Darüber hinaus können die ersten Zeitintervalle jeweils in eine Mehrzahl periodischer erster und zweiter Teilintervalle unterteilt sein, wobei erste und zweite Teilintervalle jeweils abwechselnd aufeinander folgen. Erfindungsgemäß werden während der ersten Teilintervalle durch die Koppel-Kommunikationsgeräte empfangene weiterzuleitende erste Datenrahmen in eine erste Warteschlange des jeweiligen Koppel-Kommunikationsgeräts eingefügt. Während der zweiten Teilintervalle durch die Koppel-Kommunikationsgeräte empfangene weiterzuleitende erste Datenrahmen werden in eine zweite Warteschlange des jeweiligen Koppel-Kommunikationsgeräts eingefügt. Des weiteren werden erste Datenrahmen aus den ersten Warteschlangen während eines ihrer Einfügung jeweils nachfolgenden zweiten Teilintervalls für eine Weiterleitung entnommen. Erste Datenrahmen aus den zweiten Warteschlangen werden während eines ihrer Einfügung jeweils nachfolgenden ersten Teilintervalls für eine Weiterleitung entnommen. Darüber hinaus werden zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, durch die Koppel-Kommunikationsgeräte nur innerhalb periodischer zweiter Zeitintervalle übermittelt. Auf diese Weise können Steuerungsdaten mit minimierten Laufzeiten und einem auf eine Phasenlänge reduzierten Jitter übermittelt werden. Laufzeiten können dabei insbesondere auf Basis von Hops und Phasenlänge bestimmt werden.

Entsprechend einer vorteilhaften Weiterbildung des erfindungsgemäßen Verfahrens werden weiterzuleitende erste Datenrahmen durch das jeweilige Koppel-Kommunikationsgerät bei leerer erster und zweiter Warteschlange im wesentlichen unmittelbar weitergeleitet werden. Dies ermöglicht eine zusätzliche Laufzeitreduktion. Darüber hinaus werden weiterzuleitende erste Datenrahmen durch das jeweilige Koppel-Kommunikationsgerät bei leerer erster und zweiter Warteschlange vorteilhafterweise ohne Verzögerung bis zu einem auf ihren Empfangszeitpunkt folgenden Teilintervall weitergeleitet. Entsprechend einer weiteren vorteilhaften Ausgestaltung werden weiterzuleitende erste Datenrahmen durch das jeweilige Koppel-Kommunikationsgerät bei einer leeren Warteschlange und einer befüllten Warteschlange unabhängig von einem durch erste und zweite Teilintervalle vorgegebenen Entnahmezeitplan aus der befüllten Warteschlange entnommen und weitergeleitet.

Den zweiten Datenrahmen ist entsprechend einer bevorzugten Ausgestaltung des erfindungsgemäßen Verfahrens jeweils eine festgelegte Dienstgüte für ihre Übermittlung zugeordnet. Dabei werden die zweiten Datenrahmen innerhalb der zweiten Zeitintervalle jeweils mit einer ihrer zugeordneten Dienstgüte entsprechenden Priorisierung bzw. Datenrate übermittelt. Die dritten Datenrahmen können dagegen unpriorisiert im Sinn eines "best effort" innerhalb der zweiten Zeitintervalle übermittelt werden.

Vorteilhafterweise wird durch die Koppel-Kommunikationsgeräte für die zweiten Datenrahmen eine jeweils übermittelte Datenmenge erfasst. Dabei wird die übermittelte Datenmenge periodisch innerhalb eines Überwachungszyklus erfasst, der zumindest ein erstes und ein zweites Zeitintervall umfasst. Die für jeden Überwachungszyklusdurchlauf erfasste Datenmenge wird ferner auf eine Überschreitung eines vorgegeben Mengenschwellwerts überprüft. Bei einer Überschreitung des Mengenschwellwerts wird eine Übermittlung der zweiten Datenrahmen abgebrochen, pausiert bzw. mit einer reduzierten Priorisierung fortgesetzt wird. Der jeweilige Mengenschwellwert kann beispielsweise durch die einem Datenstrom jeweils zugeordnete Dienstgüte vorgegeben sein. Die erfasste Datenmenge wird vorzugsweise jeweils zu Beginn eines jeden Überwachungszyklusdurchlaufs zurückgesetzt. Des weiteren wird die erfasste Datenmenge vorteilhafterweise bei einer pausierten Übermittlung von zweiten Datenrahmen um einen zur jeweiligen Wartezeit proportionalen Wert reduziert. Insbesondere kann die erfasste Datenmenge bei einer pausierten Übermittlung von zweiten Datenrahmen auch während eines ersten Zeitintervalls um einen zur Dauer des ersten Zeitintervalls proportionalen Wert reduziert werden.

Als Dauer für die ersten und zweiten Teilintervalle kann beispielsweise eine innerhalb des Kommunikationsnetzes ermittelte maximale Belegungsdauer einer am stärksten durch einen Datenstrom ausgelasteten Verbindung festgesetzt werden. Alternativ dazu kann als Dauer für die ersten und zweiten Teilintervalle eine Zeitschlitzdauer in dem Kommunikationsnetz mit Zeitmultiplex-Datenübermittlung festgesetzt werden.

Erfindungsgemäß wird die Laufzeit- und Jitterreduzierung realisiert, indem die ersten Zeitintervalle jeweils in eine Mehrzahl periodischer erster und zweiter Teilintervalle unterteilt werden, wobei erste und zweite Teilintervalle jeweils abwechselnd aufeinander folgen, und indem als Dauer für die ersten und zweiten Teilintervalle ein ganzzahliger Bruchteil einer Zeitschlitzdauer in dem Kommunikationsnetz mit Zeitmultiplex-Datenübermittlung festgesetzt wird. In diesem Fall werden die Koppel-Kommunikationsgeräte vorzugsweise jeweils in einem als Cut Through bezeichneten Übertragungsmodus betrieben.

Die vorliegende Erfindung wird nachfolgend an einem Ausführungsbeispiel anhand der Zeichnung näher erläutert. Es zeigt
- Figur 1: ein Kommunikationsnetz mit mehreren Switches und einer schematischen zeitlichen Datenstellung einer Übermittlung von Datenströmen,
- Figur 2: eine schematische Darstellung eines Switches gemäß Figur 1 mit zwei alternierend befüllbaren Warteschlangen pro Anschluss,
- Figur 3: eine schematische zeitliche Datenstellung einer Übermittlung von Datenrahmen für Steuerungsdaten mit einer ersten Variante des Switches gemäß Figur 2,
- Figur 4: eine schematische zeitliche Datenstellung einer Übermittlung von Datenrahmen für Steuerungsdaten mit einer zweiten Variante des Switches gemäß Figur 2.

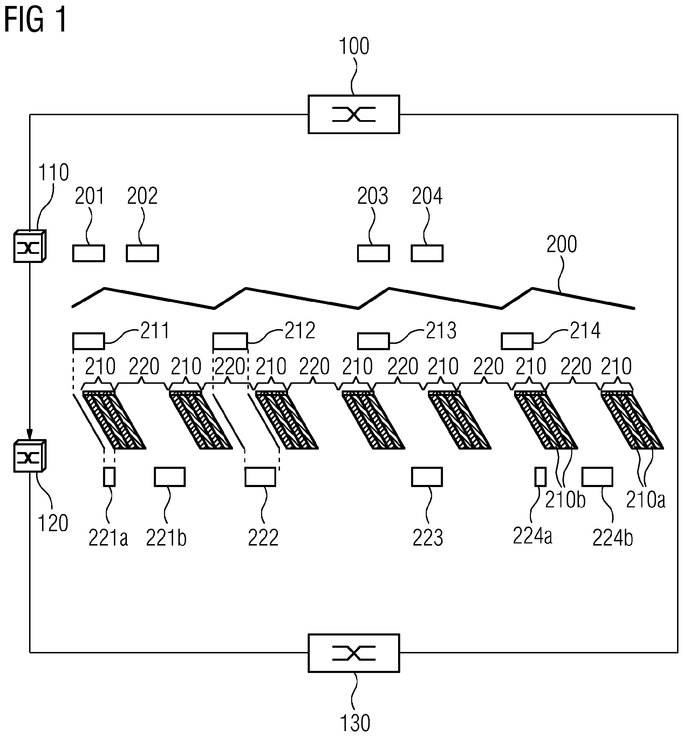

Das in Figur 1 dargestellte Kommunikationsnetz umfasst mehrere Switches 100, 110, 120, 130 die im vorliegenden Ausführungsbeispiel innerhalb einer Ringtopologie miteinander verbindbar sind. Zur Vermeidung einer Schleifenbildung wird jedoch genau ein Anschluss eines der Switches 100, 110, 120, 130 in einem für Nutzdaten nicht weiterleitenden Zustand betrieben. An die Switches 100, 110, 120, 130 können jeweils Steuerungs- bzw. Feldgeräte eines industriellen Automatisierungssystems angeschlossen werden, beispielsweise speicherprogrammierbare Steuerungen oder dezentrale Peripheriegeräte.

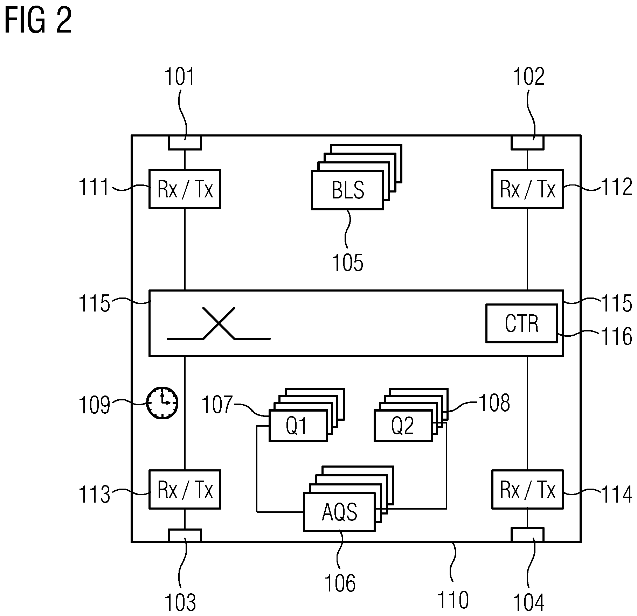

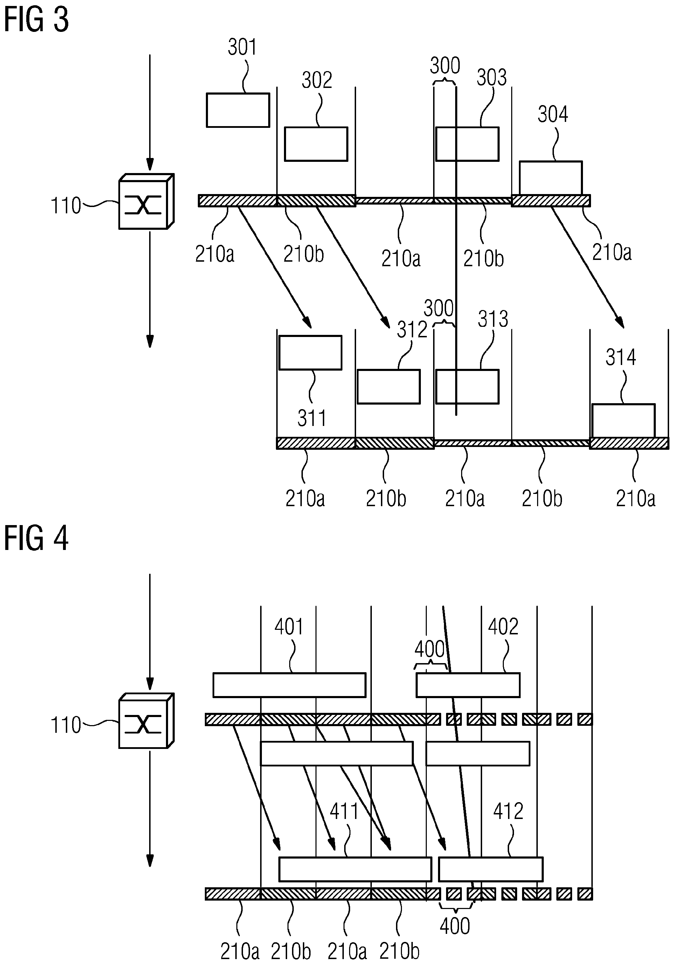

Die Switches 100, 110, 120, 130 sind im vorliegenden Ausführungsbeispiel hinsichtlich Aufbau und Funktionalität identisch. Repräsentativ für die Switches 100, 110, 120, 130 ist der Switch 110 in Figur 2 schematisch dargestellt. Der Switch 110 umfasst im vorliegenden Ausführungsbeispiel vier Sende- und Empfangseinheiten 111-114, die jeweils einen Anschluss 101-104 für eine Kommunikationsverbindung innerhalb eines industriellen Automatisierungssystems. Die Sende- und Empfangseinheiten 111-114 sind über einen Backplane Switch 115 mit zugeordnetem Controller 116 steuerbar miteinander verbunden. Den Sende- und Empfangseinheiten 111-114 sind jeweils eine erste Warteschlange 107 und eine zweite Warteschlange 108 für eine Übermittlung von Steuerungsdaten für das Automatisierungssystem zugeordnet. Dabei werden in Figur 3 und 4 näher dargestellte erste Datenrahmen 301-304, 311-314, 401-402, 411-412, die Steuerungsdaten für das Automatisierungssystem umfassen, durch die Switches 100, 110, 120, 130 nur innerhalb periodischer erster Zeitintervalle 210 übermittelt. Zweite Datenrahmen 201-204, 211-214, 221-224, die Sequenzen von Datenrahmen umfassenden Datenströmen zugeordnet sind, sowie dritte Datenrahmen, für deren Übermittlung keine oder eine unter einem vorgegebenen Schwellwert liegende Dienstgüte festgelegt ist, werden dagegen nur innerhalb periodischer zweiter Zeitintervalle 220 übermittelt. Die dritten Datenrahmen werden im vorliegenden Ausführungsbeispiel unpriorisiert innerhalb der zweiten Zeitintervalle 220 entsprechend "best effort" übermittelt.

Entsprechend Figur 1 sind die ersten und zweiten Zeitintervalle 210, 220 komplementär zueinander. Grundsätzlich können zwischen die ersten und zweiten Zeitintervalle 210, 220 zusätzlich Schutz- bzw. Sperrzeitintervalle vorgesehen sein. Die Switches 100, 110, 120, 130 sind untereinander zeitsynchronisiert. Hierzu umfasst der Switch 110 entsprechend Figur 2 eine Synchronisationseinheit 109. Als Dauer für die ersten und zweiten Teilintervalle 210a, 210b kann beispielsweise entsprechend Figur 3 eine Zeitschlitzdauer in einem Kommunikationssystem mit Zeitmultiplex-Datenübermittlung festgesetzt werden. Alternativ dazu kann als Dauer für die ersten und zweiten Teilintervalle 210a, 210b ein ganzzahliger Bruchteil einer Zeitschlitzdauer in einem Kommunikationssystem mit Zeitmultiplex-Datenübermittlung festgesetzt sein, so dass die Dauer einem Sub-Zeitschlitz entspricht (siehe Figur 4). In diesem Fall werden die Switches 100, 110, 120, 130 vorzugsweise im Übertragungsmodus Cut Through betrieben. Grundsätzlich kann als Dauer für die ersten und zweiten Teilintervalle 210a, 210b auch eine innerhalb des Kommunikationsnetzes ermittelte maximale Belegungsdauer einer am stärksten durch einen Datenstrom ausgelasteten Verbindung festgesetzt werden. Die ersten Zeitintervalle 210 sind jeweils in eine Mehrzahl erster Teilintervalle 210a und zweiter Teilintervall 210b unterteilt, wobei erste und zweite Teilintervalle 210a, 210b jeweils abwechselnd aufeinander folgen. Während der ersten Teilintervalle 210a durch die Switches 100, 110, 120, 130 empfangene weiterzuleitende erste Datenrahmen 301-304, 311-314, 401-402, 411-412 werden in die erste Warteschlange 107 für die jeweilige Sende- und Empfangseinheit 111-114 eingefügt. Demgegenüber werden während der zweiten Teilintervalle 210b empfangene weiterzuleitende erste Datenrahmen 301-304, 311-314, 401-402, 411-412 in die jeweilige zweite Warteschlange 108 eingefügt.

Für eine Weiterleitung werden die ersten Datenrahmen aus der jeweiligen ersten Warteschlange während eines ihrer Einfügung jeweils nachfolgenden zweiten Teilintervalls 210b entnommen. Analog dazu werden erste Datenrahmen aus der jeweiligen zweiten Warteschlange während eines ihrer Einfügung jeweils nachfolgenden ersten Teilintervalls 210a für eine Weiterleitung entnommen. Für eine Steuerung einer Befüllung und einer Entnahme von ersten Datenrahmen aus den ersten und zweiten Warteschlangen 107, 108 umfasst der Switch 110 entsprechend Figur 2 pro Warteschlangenpaar jeweils eine Warteschlangensteuerungseinheit 106, die eine alternierende Warteschlangenumschaltung implementiert.

Darüber hinaus sind Warteschlangensteuerungseinheiten 106 derart ausgestaltet und eingerichtet, dass weiterzuleitende erste Datenrahmen 303, 402 durch den jeweiligen Switch bei jeweils einer leeren Warteschlange und einer befüllten Warteschlange unabhängig von einem durch erste und zweite Teilintervalle 210a, 210b vorgegebenen Entnahmezeitplan im Sinn eines "shortest queue first" aus der befüllten Warteschlange entnommen und weitergeleitet werden. So weisen entsprechend Figur 3 und 4 beispielsweise die durch den Switch 110 weitergeleiten ersten Datenrahmen 313 und 412 im Gegensatz zu den weitergeleiten ersten Datenrahmen 301, 302, 304, 401 keine Verzögerung um einen Zeitschlitz bzw. Sub-Zeitschlitz im Vergleich zu den empfangenen ersten Datenrahmen 301-304, 401-402 auf. Voraussetzung entsprechend dem vorliegenden Ausführungsbeispiel hierfür ist, dass die jeweiligen ersten Datenrahmen 303, 402 innerhalb einer vorgegebenen Schutzzeit 300, 400 ab Beginn des jeweiligen Teilintervalls empfangen werden.

Den zweiten Datenrahmen 201-204, 211-214, 221-224 ist jeweils eine festgelegte Dienstgüte für ihre Übermittlung zugeordnet. Auf diese Weise werden die zweiten Datenrahmen innerhalb der zweiten Zeitintervalle 220 jeweils mit einer ihrer zugeordneten Dienstgüte entsprechenden Priorisierung bzw. Datenrate übermittelt werden. Hierzu umfasst der Switch 110 pro Sende- und Empfangseinheit 111-114 jeweils eine Datenmengenerfassungseinheit 105 zur Implementierung eines Burst Limiting Shaper oder Credit-based Shaper für zweite Datenrahmen.

In Figur 1 wird eine Wirkungsweise eines Burst Limiting Shaper bzw. Credit-based Shaper in Bezug auf durch den Switch 110 empfangene zweite Datenrahmen 201-204 und für eine Weiterleitung geplante zweite Datenrahmen 211-214 veranschaulicht. Mittels eines Burst Limiting Shaper bzw. Credit-based Shaper wird für die zweiten Datenrahmen eine jeweils übermittelte bzw. geplante Datenmenge 200 erfasst. Dabei wird die übermittelte bzw. geplante Datenmenge 200 periodisch innerhalb eines Überwachungszyklus erfasst, der zumindest ein erstes und ein zweites Zeitintervall 210, 220 umfasst. Die für jeden Überwachungszyklusdurchlauf erfasste Datenmenge wird dabei auf eine Überschreitung eines vorgegeben Mengenschwellwerts überprüft. Bei einer Überschreitung des Mengenschwellwerts wird eine Übermittlung der zweiten Datenrahmen pausiert (Credit-based Shaper) oder mit einer reduzierten Priorisierung (Burst Limiting Shaper) fortgesetzt. Dabei ist der jeweilige Mengenschwellwert durch die einem Datenstrom jeweils zugeordnete Dienstgüte vorgegeben. Jeweils zu Beginn eines jeden Überwachungszyklusdurchlaufs wird die erfasste Datenmenge zurückgesetzt. Bei einer pausierten Übermittlung von zweiten Datenrahmen wird die erfasste Datenmenge um einen zur jeweiligen Wartezeit proportionalen Wert reduziert.

Da eine Übermittlung zweiter Datenrahmen nur innerhalb zweiter Zeitintervalle 220 erfolgt, werden die für eine Weiterleitung zum Switch 120 geplanten zweiten Datenrahmen 211, 214 im Gegensatz zu den zweiten Datenrahmen 212, 213 mit einer Pausierung übermittelt. Dementsprechend wird ein Teil 221a, 224a der Datenrahmen 211, 214 vor der Pausierung durch den Switch 120 empfangen, während ein anderer Teil 221b, 224b nach der Pausierung empfangen wird. Die aus den übermittelten Datenrahmen 212, 213 hervorgehenden empfangenen Datenrahmen 222, 223 unterliegen im vorliegenden Ausführungsbeispiel dagegen lediglich einer Signallaufzeitverzögerung auf einer Verbindung zwischen den Switches 110 und 120.

## Patentansprüche

1. Verfahren zur Datenübermittlung in einem Kommunikationsnetz eines industriellen Automatisierungssystems, bei dem
- erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt werden,
- die ersten Zeitintervalle jeweils zumindest in ein erstes und zweites Teilintervall unterteilt sind,
- die ersten Zeitintervalle jeweils in eine Mehrzahl periodischer erster und zweiter Teilintervalle unterteilt sind, wobei erste und zweite Teilintervalle jeweils abwechselnd aufeinander folgen,
- als Dauer für die ersten und zweiten Teilintervalle ein ganzzahliger Bruchteil einer Zeitschlitzdauer in dem Kommunikationsnetz mit Zeitmultiplex-Datenübermittlung festgesetzt wird,
- weiterzuleitende erste Datenrahmen, die während der ersten Teilintervalle durch die Koppel-Kommunikationsgeräte empfangen werden, in eine erste Warteschlange des jeweiligen Koppel-Kommunikationsgeräts eingefügt werden,
- weiterzuleitende erste Datenrahmen, die während der zweiten Teilintervalle durch die Koppel-Kommunikationsgeräte empfangen werden, in eine zweite Warteschlange des jeweiligen Koppel-Kommunikationsgeräts eingefügt werden,
- erste Datenrahmen aus den ersten Warteschlangen während eines ihrer Einfügung jeweils nachfolgenden zweiten Teilintervalls für eine Weiterleitung entnommen werden,
- erste Datenrahmen aus den zweiten Warteschlangen während eines ihrer Einfügung jeweils nachfolgenden ersten Teilintervalls für eine Weiterleitung entnommen werden,
- zweite Datenrahmen, die Sequenzen von Datenrahmen umfassenden Datenströmen zugeordnet sind, und/oder dritte Datenrahmen, für deren Übermittlung keine oder eine unter einem vorgegebenen Schwellwert liegende Dienstgüte festgelegt ist, durch die Koppel-Kommunikationsgeräte nur innerhalb periodischer zweiter Zeitintervalle übermittelt werden,
- die Koppel-Kommunikationsgeräte jeweils in einem als Cut Through bezeichneten Übertragungsmodus betrieben werden.

2. Verfahren nach Anspruch 1,
bei dem die ersten und zweiten Zeitintervalle komplementär zueinander sind.

3. Verfahren nach einem der Ansprüche 1 oder 2,
bei dem weiterzuleitende erste Datenrahmen durch das jeweilige Koppel-Kommunikationsgerät bei leerer erster und zweiter Warteschlange unmittelbar weitergeleitet werden.

4. Verfahren nach Anspruch 3,
bei dem weiterzuleitende erste Datenrahmen durch das jeweilige Koppel-Kommunikationsgerät bei leerer erster und zweiter Warteschlange ohne Verzögerung bis zu einem auf ihren Empfangszeitpunkt folgenden Teilintervall weitergeleitet werden.

5. Verfahren nach einem der Ansprüche 1 bis 4,
bei dem weiterzuleitende erste Datenrahmen durch das jeweilige Koppel-Kommunikationsgerät bei einer leeren Warteschlange und einer befüllten Warteschlange unabhängig von einem durch erste und zweite Teilintervalle vorgegebenen Entnahmezeitplan aus der befüllten Warteschlange entnommen und weitergeleitet werden.

6. Verfahren nach einem der Ansprüche 1 bis 5,
bei dem den zweiten Datenrahmen jeweils eine festgelegte Dienstgüte für ihre Übermittlung zugeordnet ist, und bei dem die zweiten Datenrahmen innerhalb der zweiten Zeitintervalle jeweils mit einer ihrer zugeordneten Dienstgüte entsprechenden Priorisierung und/oder Datenrate übermittelt werden.

7. Verfahren nach einem der Ansprüche 1 bis 6,
bei dem durch die Koppel-Kommunikationsgeräte für die zweiten Datenrahmen eine jeweils übermittelte Datenmenge erfasst wird, und bei dem die übermittelte Datenmenge periodisch innerhalb eines Überwachungszyklus, der zumindest ein erstes und ein zweites Zeitintervall umfasst, erfasst wird, und bei dem die für jeden Überwachungszyklusdurchlauf erfasste Datenmenge auf eine Überschreitung eines vorgegeben Mengenschwellwerts überprüft wird, und bei dem eine Übermittlung der zweiten Datenrahmen bei einer Überschreitung des Mengenschwellwerts abgebrochen, pausiert und/oder mit einer reduzierten Priorisierung fortgesetzt wird.

8. Verfahren nach Anspruch 7,
bei dem der jeweilige Mengenschwellwert durch die einem Datenstrom jeweils zugeordnete Dienstgüte vorgegeben ist.

9. Verfahren nach einem der Ansprüche 7 oder 8,
bei dem die erfasste Datenmenge jeweils zu Beginn eines jeden Überwachungszyklusdurchlaufs zurückgesetzt wird.

10. Verfahren nach einem der Ansprüche 7 bis 9,
bei dem die erfasste Datenmenge bei einer pausierten Übermittlung von zweiten Datenrahmen um einen zur jeweiligen Wartezeit proportionalen Wert reduziert wird.

11. Verfahren nach Anspruch 10,
bei dem die erfasste Datenmenge bei einer pausierten Übermittlung von zweiten Datenrahmen während eines ersten Zeitintervalls um einen zur Dauer des ersten Zeitintervalls proportionalen Wert reduziert wird.

12. Verfahren nach einem der Ansprüche 1 bis 11,
bei dem die dritten Datenrahmen unpriorisiert innerhalb der zweiten Zeitintervalle übermittelt werden.

13. Verfahren nach einem der Ansprüche 1 bis 12,
bei dem als Dauer für die ersten und zweiten Teilintervalle eine innerhalb des Kommunikationsnetzes ermittelte maximale Belegungsdauer einer am stärksten durch einen Datenstrom ausgelasteten Verbindung festgesetzt wird.

14. Verfahren nach einem der Ansprüche 1 bis 12,
bei dem als Dauer für die ersten und zweiten Teilintervalle eine Zeitschlitzdauer in dem Kommunikationsnetz mit Zeitmultiplex-Datenübermittlung festgesetzt wird.

15. Verfahren nach einem der Ansprüche 1 bis 14,
bei dem die Koppel-Kommunikationsgeräte untereinander zeitsynchronisiert sind.

16. Verfahren nach einem der Ansprüche 1 bis 15,
bei dem die Koppel-Kommunikationsgeräte Switches oder Bridges sind.

17. Koppel-Kommunikationsgerät für ein industrielles Automatisierungssystem zur Durchführung eines Verfahrens nach einem der Ansprüche 1 bis 16
- mit mehreren Anschlüssen für eine Verbindung mit innerhalb eines industriellen Kommunikationsnetzes miteinander verbundenen Kommunikationsgeräten,
- mit den Anschlüssen zugeordneten Sende- und Empfangseinheiten, denen zumindest eine erste Warteschlange und eine zweite Warteschlange zugeordnet ist,
- mit einem die Sende- und Empfangseinheiten miteinander verbindenden Koppelelement,
- wobei das Koppel-Kommunikationsgerät dafür ausgestaltet und eingerichtet ist, dass erste Datenrahmen, die Steuerungsdaten für das Automatisierungssystem umfassen, nur innerhalb periodischer erster Zeitintervalle übermittelt werden, wobei die ersten Zeitintervalle jeweils zumindest in ein erstes und zweites Teilintervall unterteilt sind,
- wobei die ersten Zeitintervalle jeweils in eine Mehrzahl periodischer erster und zweiter Teilintervalle unterteilt sind, wobei erste und zweite Teilintervalle jeweils abwechselnd aufeinander folgen,
- wobei als Dauer für die ersten und zweiten Teilintervalle ein ganzzahliger Bruchteil einer Zeitschlitzdauer in dem industriellen Kommunikationsnetz mit Zeitmultiplex-Datenübermittlung festgesetzt ist,
- wobei das Koppel-Kommunikationsgerät dafür ausgestaltet und eingerichtet ist, dass weiterzuleitende erste Datenrahmen, die während der ersten Teilintervalle durch das Koppel-Kommunikationsgerät empfangen werden, in die erste Warteschlange eingefügt werden,
- wobei das Koppel-Kommunikationsgerät dafür ausgestaltet und eingerichtet ist, dass weiterzuleitende erste Datenrahmen die während der zweiten Teilintervalle durch das Koppel-Kommunikationsgerät empfangen werden, in die zweite Warteschlange eingefügt werden,
- wobei das Koppel-Kommunikationsgerät dafür ausgestaltet und eingerichtet ist, dass erste Datenrahmen aus der ersten Warteschlange während eines ihrer Einfügung jeweils nachfolgenden zweiten Teilintervalls für eine Weiterleitung entnommen werden,
- wobei das Koppel-Kommunikationsgerät dafür ausgestaltet und eingerichtet ist, dass erste Datenrahmen aus der zweiten Warteschlange während eines ihrer Einfügung jeweils nachfolgenden ersten Teilintervalls für eine Weiterleitung entnommen werden,
- wobei das Koppel-Kommunikationsgerät dafür ausgestaltet und eingerichtet ist, dass zweite Datenrahmen, die Sequenzen von Datenrahmen umfassenden Datenströmen zugeordnet sind, und/oder dritte Datenrahmen, für deren Übermittlung keine oder eine unter einem vorgegebenen Schwellwert liegende Dienstgüte festgelegt ist, nur innerhalb periodischer zweiter Zeitintervalle übermittelt werden,
- wobei das Koppel-Kommunikationsgerät dafür ausgestaltet und eingerichtet ist, in einem als Cut Through bezeichneten Übertragungsmodus betrieben zu werden.

18. Koppel-Kommunikationsgerät nach Anspruch 17,
bei dem das Koppel-Kommunikationsgerät ein Switch oder eine Bridge ist.

## Claims

1. Method for transmitting data in a communication network of an industrial automation system, in which
- first data frames comprising control data for the automation system are transmitted by coupling communication devices of the communication network only within periodic first intervals of time,
- the first intervals of time are each subdivided at least into a first and a second sub-interval,
- the first intervals of time are each subdivided into a plurality of periodic first and second sub-intervals, first and second sub-intervals each alternately following one another,
- an integer fraction of a time slot duration in the communication network having time-division multiplexing data transmission is stipulated as the duration for the first and second sub-intervals,
- first data frames which are to be forwarded and are received by the coupling communication devices during the first sub-intervals are inserted into a first queue of the respective coupling communication device,
- first data frames which are to be forwarded and are received by the coupling communication devices during the second sub-intervals are inserted into a second queue of the respective coupling communication device,
- first data frames are removed from the first queues for forwarding during a second sub-interval respectively following their insertion,
- first data frames are removed from the second queues for forwarding during a first sub-interval respectively following their insertion,
- second data frames, which are assigned to data streams comprising sequences of data frames, and/or third data frames, for the transmission of which no quality of service or a quality of service below a predefined threshold value is stipulated, are transmitted by the coupling communication devices only within periodic second intervals of time,
- the coupling communication devices are each operated in a transmission mode referred to as cut through.

2. Method according to Claim 1,
in which the first and second intervals of time are complementary to one another.

3. Method according to either of Claims 1 and 2,
in which first data frames to be forwarded are forwarded immediately by the respective coupling communication device if the first and second queues are empty.

4. Method according to Claim 3,
in which first data frames to be forwarded are forwarded by the respective coupling communication device without delay if the first and second queues are empty until a sub-interval following their reception time.

5. Method according to one of Claims 1 to 4,
in which, if there is an empty queue and a filled queue, first data frames to be forwarded are removed from the filled queue and forwarded by the respective coupling communication device irrespective of a removal schedule predefined by first and second sub-intervals.

6. Method according to one of Claims 1 to 5,
in which a stipulated quality of service is respectively assigned to the second data frames for their transmission, and in which the second data frames are each transmitted with a prioritization and/or data rate corresponding to their assigned quality of service within the second intervals of time.

7. Method according to one of Claims 1 to 6,
in which a respectively transmitted data volume is recorded for the second data frames by the coupling communication devices, and in which the transmitted data volume is periodically recorded within a monitoring cycle comprising at least a first and a second interval of time, and in which the data volume recorded for each monitoring cycle pass is checked for the exceeding of a predefined volume threshold value, and in which transmission of the second data frames is aborted, paused and/or continued with a reduced prioritization if the volume threshold value is exceeded.

8. Method according to Claim 7,
in which the respective volume threshold value is predefined by the quality of service respectively assigned to a data stream.

9. Method according to either of Claims 7 and 8,
in which the recorded data volume is respectively reset at the start of each monitoring cycle pass.

10. Method according to one of Claims 7 to 9,
in which the recorded data volume is reduced, in the case of paused transmission of second data frames, by a value proportional to the respective waiting time.

11. Method according to Claim 10,
in which the recorded data volume is reduced, in the case of paused transmission of second data frames during a first interval of time, by a value proportional to the duration of the first interval of time.

12. Method according to one of Claims 1 to 11,
in which the third data frames are transmitted without a priority within the second intervals of time.

13. Method according to one of Claims 1 to 12,
in which a maximum use duration of a connection used most by a data stream, which is determined inside the communication network, is stipulated as the duration for the first and second sub-intervals.

14. Method according to one of Claims 1 to 12,
in which a time slot duration in the communication network having time-division multiplexing data transmission is stipulated as the duration for the first and second sub-intervals.

15. Method according to one of Claims 1 to 14,
in which the coupling communication devices are time-synchronized with one another.

16. Method according to one of Claims 1 to 15,
in which the coupling communication devices are switches or bridges.

17. Coupling communication device for an industrial automation system for carrying out a method according to one of Claims 1 to 16,
- having a plurality of terminals for a connection to communication devices connected to one another inside an industrial communication network,
- having transmitting and receiving units which are assigned to the terminals and are assigned at least a first queue and a second queue,
- having a coupling element which connects the transmitting and receiving units to one another,
- the coupling communication device being configured and set up in such a manner that first data frames comprising control data for the automation system are transmitted only within periodic first intervals of time, the first intervals of time each being subdivided at least into a first and a second sub-interval,
- the first intervals of time being each subdivided into a plurality of periodic first and second sub-intervals, first and second sub-intervals each alternately following one another,
- an integer fraction of a time slot duration in the industrial communication network having time-division multiplexing data transmission being stipulated as the duration for the first and second sub-intervals,
- the coupling communication device being configured and set up in such a manner that first data frames which are to be forwarded and are received by the coupling communication device during the first sub-intervals are inserted into the first queue,
- the coupling communication device being configured and set up in such a manner that first data frames which are to be forwarded and are received by the coupling communication device during the second sub-intervals are inserted into the second queue,
- the coupling communication device being configured and set up in such a manner that first data frames are removed from the first queue for forwarding during a second sub-interval respectively following their insertion,
- the coupling communication device being configured and set up in such a manner that first data frames are removed from the second queue for forwarding during a first sub-interval respectively following their insertion,
- the coupling communication device being configured and set up in such a manner that second data frames, which are assigned to data streams comprising sequences of data frames, and/or third data frames, for the transmission of which no quality of service or a quality of service below a predefined threshold value is stipulated, are transmitted only within periodic second intervals of time,
- the coupling communication device being configured and set up to be operated in a transmission mode referred to as cut through.

18. Coupling communication device according to Claim 17,
in which the coupling communication device is a switch or a bridge.

## Revendications

1. Procédé de transmission de données dans un réseau de communication d'un système d'automatisation industriel, dans lequel
- on transmet, par des appareils de communication de couplage du réseau de communication, seulement dans un premier intervalle de temps périodique, une trame de données, qui comprend des données de commande du système d'automatisation industriel,
- les premiers intervalles de temps sont subdivisés chacun au moins en un premier intervalle partiel et en un deuxième intervalle partiel,
- les premiers intervalles de temps sont subdivisés chacun en une pluralité de premiers et deuxièmes intervalles partiels périodiques, des premiers et deuxièmes intervalles de temps se succédant chacun en alternance,
- on fixe, par transmission de données en multiplexage dans le temps, comme durée, des premiers et deuxièmes intervalles partiels, une fraction en nombre entier d'une durée de créneau temporel de temps dans le réseau de communication,
- on insère, dans une première file d'attente de l'appareil de communication de couplage respectif, des premières trames de données à acheminer, qui sont reçues par les premiers appareils de communication de couplage pendant les premiers intervalles partiels,
- on insère, dans une deuxième file d'attente de l'appareil de communication de couplage respectif, des premières trames de données à acheminer, qui sont reçues par les appareils de communication de couplage pendant les deuxièmes intervalles partiels,
- on prélève, pour un acheminement, des premières trames de données des premières files d'attente pendant un deuxième intervalle de temps suivant, respectivement, leur insertion,
- on prélève, pour un acheminement, des premières trames de données des deuxièmes files d'attente pendant un premier intervalle partiel suivant, respectivement, leur insertion,
- on transmet, par les appareils de couplage, seulement dans des deuxièmes intervalles de temps périodiques, des deuxièmes trames de données, qui sont affectées à des flux de données comprenant des séquences de trames de données et/ou des troisièmes trames de données pour lesquelles il n'est pas fixée de qualité de service ou une qualité de service inférieure à une valeur de seuil donnée à l'avance,
- on fait fonctionner les appareils de communication de couplage, chacun dans un mode de transmission désigné par cut through.

2. Procédé suivant la revendication 1,
dans lequel les premiers et deuxièmes intervalles de temps sont complémentaires le uns des autres.

3. Procédé suivant l'une des revendications 1 ou 2,
dans lequel on achemine directement, si la première et la deuxième files d'attente sont vides, par l'appareil de communication de couplage respectif, des premières trames de données à acheminer.

4. Procédé suivant la revendication 3,
dans lequel on achemine, sans retard, jusqu'à un intervalle partiel suivant leur instant de réception, si la première et la deuxième files d'attente sont vides, par l'appareil de communication de couplage respectif, des premières trames de données à acheminer.

5. Procédé suivant l'une des revendications 1 à 4,
dans lequel on prélève, par l'appareil de communication de couplage respectif, si une file d'attente est vide et une file d'attente est pleine, de la file d'attente pleine, indépendamment d'un plan temporel de prélèvement donné à l'avance par des premiers et deuxièmes intervalles partiels, des premières trames de données à acheminer et on les achemine.

6. Procédé suivant l'une des revendications 1 à 5,
dans lequel, aux deuxièmes trames de données, est affectée, respectivement, une qualité de service fixée pour leur transmission et dans lequel on transmet les deuxièmes trames de données dans les deuxièmes intervalles de temps, chacune avec une priorité et/ou un débit de données correspondant à une qualité de service, qui leur est associée.

7. Procédé suivant l'une des revendications 1 à 6,
dans lequel on détecte, par les appareils de communication de couplage, pour les deuxièmes trames de données, une quantité de données à transmettre respectivement et dans lequel on détecte la qualité de données à transmettre périodiquement dans un cycle de contrôle, qui comprend au moins un premier et un deuxième intervalles de temps, et dans lequel on contrôle la quantité de données détectées pour chaque déroulement du cycle de contrôle, sur le point de savoir s'il y a un dépassement d'une valeur de seuil de quantité donnée à l'avance, et dans lequel on arrête, interrompt et/ou poursuit, avec une priorité réduite, une transmission des deuxièmes trames de données, si la valeur de seuil de quantité est dépassée.

8. Procédé suivant la revendication 7,
dans lequel la valeur de seuil de quantité respective est prescrite par la qualité de service affectée, respectivement, à un flux de données.

9. Procédé suivant l'une des revendications 7 ou 8,
dans lequel on remet à zéro la quantité de données détectées, respectivement, au début de chaque déroulement d'un cycle de contrôle.

10. Procédé suivant l'une des revendications 7 à 9,
dans lequel on réduit, d'une valeur proportionnelle au temps d'attente, la quantité de données détectées, lors d'une interruption de transmission de deuxièmes trames de données.

11. Procédé suivant la revendication 10,
dans lequel on réduit, d'une valeur proportionnelle à la durée du premier intervalle de temps, pendant un deuxième intervalle de temps, la quantité de données détectées, s'il y a eu une interruption de la transmission de deuxièmes trames de données.

12. Procédé suivant l'une des revendication 1 à 11,
dans lequel on transmet les troisièmes trames de données sans priorité dans les deuxièmes intervalles de temps.

13. Procédé suivant l'une des revendications 1 à 12,
dans lequel on fixe comme durée des premiers et deuxièmes intervalles partiels, des durées de connexion maximum déterminées dans le réseau de communication d'une liaison la plus chargée par un flux de courant.

14. Procédé suivant l'une des revendications 1 à 12,
dans lequel on fixe comme durée des premiers et deuxièmes intervalles partiels, une durée de créneau temporel dans le réseau de communication, avec transmission de données à multiplexage dans le temps.

15. Procédé suivant l'une des revendications 1 à 14,
dans lequel les appareils de communication de couplage sont synchronisés dans le temps entre eux.

16. Procédé suivant l'une des revendications 1 à 15,
dans lequel les appareils de communication de couplage sont des switches ou des bridges.

17. Appareil de communication de couplage d'un système d'automatisation industriel pour effectuer un procédé suivant l'une des revendications 1 à 16
- ayant plusieurs accès pour une communication avec des appareils de communication communicant entre eux au sein d'un réseau de communication industriel,
- comprenant des unités d'émission et de réception, qui sont affectées aux accès et auxquelles est associée au moins une première file d'attente et une deuxième file d'attente,
- comprenant un élément de couplage mettant les unités d'émission et de réception en communication entre elles,
- dans lequel l'appareil de communication de couplage est conformé et conçu pour ne transmettre que dans des premiers intervalles de temps périodiques des premières trames de données, qui comprennent des données de commande du système d'automatisation, les premiers intervalles de temps étant subdivisés chacun au moins en un premier et un deuxième intervalles partiels,
- dans lequel les premiers intervalles de temps sont subdivisés chacun en une pluralité de premiers et deuxièmes intervalles partiels périodiques, des premiers et deuxièmes intervalles partiels se succédant les uns aux autres en alternance,
- on fixe, comme durée pour les premiers et deuxièmes intervalles partiels, une fraction en nombre entier d'une durée de créneau temporel dans le réseau de communication industriel à transmission de données à multiplexage dans le temps,
- dans lequel l'appareil de communication de couplage est conformé et conçu pour insérer, dans la première file d'attente, des premières trames de données à acheminer, qui sont reçues, pendant les premiers intervalles partiels, par l'appareil de communication de couplage,
- dans lequel l'appareil de communication de couplage est conformé et conçu pour insérer, dans la deuxième file d'attente, des premières trames de données à acheminer, qui ont été reçues, pendant les deuxièmes intervalles partiels, par l'appareil de communication de couplage,
- dans lequel l'appareil de communication de couplage est conformé et conçu pour prélever, pour un acheminement, des premières trames de données de la première file d'attente, pendant un deuxième intervalle partiel suivant leur insertion respective,
- dans lequel l'appareil de communication de couplage est conformé et conçu pour prélever, pour un acheminement, des premières trames de données de la deuxième file d'attente, pendant un premier intervalle partiel suivant leur insertion respective,
- dans lequel l'appareil de communication de couplage est conformé et conçu pour ne transmettre que dans des deuxièmes intervalles de temps périodiques des deuxièmes trames de données, qui sont affectées à des flux de données comprenant des séquences de trames de données et/ou des troisièmes trames de données pour la transmission desquelles il n'est pas fixé de qualité de service ou une qualité de service inférieure à une valeur de seuil donnée à l'avance,
- dans lequel l'appareil de communication de couplage est conformé et conçu pour fonctionner dans un mode de transmission désigné par cut through.

18. Appareil de communication de couplage suivant la revendication 17, dans lequel l'appareil de communication de couplage est un switch ou un bridge.
